# EUROPEAN PATENT APPLICATION

(11) **EP 4 644 972 A1**
(43) Date of publication of application: **05.11.2025**
(21) Application number: 23911713.8
(22) Date of filing: 13.12.2023
(51) Int. Cl.: G02B 27/28

(54) **OPTICAL ISOLATOR**

(30) Priority: 28.12.2022 JP 2022212506
(71) Applicant: SHIN-ETSU CHEMICAL CO., LTD., Tokyo 1000005 (JP)
(72) Inventor: WATANABE Toshiaki, Annaka-shi, Gunma 379-0195 (JP)
(74) Representative: Schicker, Silvia
(86) International application number: PCT/JP2023/044600
(87) International publication number: WO 2024/142932

(57) **Abstract**

The present invention is an optical isolator including one or more metal particle-dispersed glass polarizers and one or more Faraday rotators in a traveling direction of light, in which a light-transmitting plate having a higher thermal conductance than the metal particle-dispersed glass polarizer and a refractive index of 2.5 or less at an operating wavelength is bonded to at least one surface of a light-transmitting surface of the metal particle-dispersed glass polarizer without using an organic-based adhesive. This provides the optical isolator having high light resistance that can effectively reduce the effects of heat generation.

## Description

### TECHNICAL FIELD

The present invention relates to an optical isolator used in, for example, optical communication and optical measurement.

### BACKGROUND ART

In optical communication and optical measurement, laser oscillation becomes unstable when light emitted from a semiconductor laser is reflected by a surface of a member provided somewhere along a transmission line and returns to the semiconductor laser as reflected light. In order to block this reflected return light, an optical isolator is used, which includes a Faraday rotator to rotate a polarization plane in a non-reciprocal manner.

In general, the optical isolator is configured with one or more polarizers arranged in a light transmission direction, one or more Faraday rotators, and magnets and the like arranged around these for applying a magnetic field parallel to a traveling direction of transmitted light.

For example, in a case of the optical isolator that is configured with the Faraday rotator, two polarizers arranged on either side of the light transmission direction, and the magnets and the like arranged around the Faraday rotator for applying the magnetic field parallel to the traveling direction of transmitted light; incident light is linearly polarized by the first polarizer and transmits through the Faraday rotator. The incident linearly polarized light has a polarization plane rotated by 45° by this Faraday rotator, and is then emitted through the second polarizer that is arranged by tilting a transmission polarization plane by 45° from vertical. Although return light has various polarization components, only the polarization component tilted by 45° from the vertical transmits through the second polarizer. This polarization component is subjected to optical rotation by 45° by the Faraday rotator and is turned into polarized light tilted to the vertical with respect to the transmission polarization plane of the first polarizer. Consequently, the polarized light cannot transmit through the first polarizer, and the light does not return to the light source side.

### CITATION LIST

### PATENT LITERATURE

Patent Document 1: JP H7-281129 A
Patent Document 2: JP 2005-43853 A
Patent Document 3: JP 2007-108344 A

### SUMMARY OF INVENTION

### TECHNICAL PROBLEM

In optical isolators, there has been a demand in recent years to deal with an increasing power output of laser light, which is to be a light source. Temperature rise due to light absorption by a Faraday rotator can be referred to as a problem to deal with a high-powered laser light source. When the temperature of the Faraday rotator rises, a Faraday rotation angle is changed, resulting in degradation of characteristics such as an extinction ratio of the optical isolator.

In order to solve such a problem, various proposals are provided. For example, Patent Document 1 proposes a configuration in which a magneto-optical crystal is sandwiched between garnet substrates. However, thermal conductivity of the garnet substrate is insufficient, and it is difficult to suppress the temperature rise of the Faraday rotator when an output exceeds 100 mW.

In Patent Document 2, a Faraday rotator is in contact with sapphire single crystals, which have a high thermal conductivity, to improve heat dissipation. However, since the sapphire single crystal is a birefringent crystal, this causes a problem where an extinction ratio is deteriorated depending on an angle of incidence of light.

Moreover, in Patent Document 3, an extinction ratio is prevented from deteriorating by aligning a crystal axis of a wedge-shaped birefringent crystal plate and that of a sapphire single crystal plate. However, production steps that take into account the crystal axes of transparent crystal plates become very complicated.

In optical communication, efforts are being made to increase an optical output of individual LD (Laser Diode) chips being used, to achieve high speed, high optical density, and long distance, and to reduce the number of repeaters. To reduce the number of optical components, such as the optical isolator, the signal light from the LD chip is further combined with four or eight waves, etc., and then transmitted through the optical isolator. As a result, the signal light transmitted through the optical isolator has increased from about several to 20 mW in the past, to about 150 to 500 mW.

Since incident light is polarized LD light, the polarized light having an extinction light ratio of around 20 dB (100:1) is transmitted, and by aligning incident polarized wave of the optical isolator, the polarized light is transmitted with a loss of around 0.07 to 0.1 dB (transmittance of 97.7 to 98.4%: when calculated from the signal light, this results in a maximum light absorption of around 12 mW). On the other hand, when assuming that 4% of the light is reflected at an end of a glass, such as fiber, an amount of light is equivalent to 20 mW, and that light is absorbed by the optical isolator and converted into heat. When assuming that a high light reflection of around 30% occurs due to an intervention of reflective media such as a prism or an amplifier, the amount of light reaches about 150 mW, and that light is absorbed by the optical isolator and converted into heat.

In a laser light reflection return experiment near the end, the polarized light returns without alteration to the optical isolator, and thus transmits through a second polarizer without alteration, and the light is blocked by a first polarizer. The polarized light is reflected at the polarizer surface as backscattered light (about 5 to 8% of an amount of returned light), and the remaining light is completely absorbed by the polarizer (the remaining 92 to 95% of the returned light), in which the absorbed light is then converted into heat. As a result of concentrated heat transfer, an adhesive layer at an interface between the first polarizer and the Faraday rotator is broken. Alternatively, when the polarization state of the return light is close to circular polarization, approximately 3 dB (equivalent to 50%) of the light in the return light is absorbed by the second polarizer and converted into heat, causing heat concentration that leads to breakage of the adhesive layer between the second polarizer and the Faraday rotator.

The present invention has been made to solve the above problem. An object of the present invention is to provide an optical isolator having high light resistance that can effectively reduce the effects of heat generation.

### SOLUTION TO PROBLEM

To achieve the object, the present invention provides an optical isolator comprising one or more metal particle-dispersed glass polarizers and one or more Faraday rotators in a traveling direction of light, wherein
a light-transmitting plate having a higher thermal conductance than the metal particle-dispersed glass polarizer and a refractive index of 2.5 or less at an operating wavelength is bonded to at least one surface of a light-transmitting surface of the metal particle-dispersed glass polarizer without using an organic-based adhesive.

According to such an optical isolator, effect of heat generation can be effectively reduced, and the optical isolator is highly resistant to light.

In this case, it is possible that the optical isolator comprises the light-transmitting plate on the light-transmitting surface of the Faraday rotator side of the metal particle-dispersed glass polarizer, and the light-transmitting plate and the Faraday rotator are bonded via the organic-based adhesive.

This allows more effective suppression of strain caused by differences in coefficient of thermal expansion between materials, which affects optical characteristics, and also facilitates easier setting of the polarizer.

In this case, it is possible that the optical isolator is attached to an end portion of an optical fiber, and
the optical isolator comprises the light-transmitting plate on the light-transmitting surface opposite side to the Faraday rotator of the metal particle-dispersed glass polarizer, thereby allowing the end portion of the optical fiber to be attached to the light-transmitting plate.

As a result, light emitted from the optical fiber spreads more widely, increasing a beam diameter reaching the optical isolator material, thereby allowing further, more effective reduction of thermal effects.

### ADVANTAGEOUS EFFECTS OF INVENTION

As described above, according to the inventive optical isolator, the effect of heat generation can be effectively reduced, thereby achieving high light resistance.

### BRIEF DESCRIPTION OF DRAWINGS

FIG. 1 is an example (sectional view) illustrating an optical isolator using polarizers bonded to light-transmitting plates and a Faraday rotator.
FIG. 2 is an example of an optical isolator attached to an end portion of an optical fiber.
FIG. 3 is an example (sectional view) illustrating a metal particle-dispersed glass polarizer.
FIG. 4 is an example (sectional view) illustrating metal particle reduction layer surfaces of metal particle-dispersed glass polarizers on which light-transmitting plates according to the present invention are bonded.
FIG. 5 is an example (sectional view) illustrating an optical isolator according to a conventional example (Comparative Example 1).
FIG. 6 is an example (sectional view) illustrating an optical isolator according to a conventional example (Comparative Example 2), which is attached to an end portion of an optical fiber.
FIG. 7 shows a refractive index dependency of a ratio of an area of spread light that transmits through a light-transmitting plate and an area at a core end of an optical fiber when assuming the light-transmitting plate has a thickness of 0.2 mm and the optical fiber (SM fiber) has NA=0.14.
FIG. 8 shows a ratio of end face areas of an optical fiber when the thickness of a light-transmitting plate is varied.

### DESCRIPTION OF EMBODIMENTS

Hereinafter, the present invention will be described in detail. However, the present invention is not limited thereto.

As described above, an optical isolator having high light resistance that can effectively reduce an effect of heat generation has been desired.

To solve the above problem, the present inventors have earnestly studied and found that an optical isolator comprising one or more metal particle-dispersed glass polarizers and one or more Faraday rotators in a traveling direction of light, wherein
a light-transmitting plate having a higher thermal conductance than the metal particle-dispersed glass polarizer and a refractive index of 2.5 or less at an operating wavelength is bonded to at least one surface of a light-transmitting surface of the metal particle-dispersed glass polarizer without using an organic-based adhesive. Furthermore, the present inventors found that this optical isolator is capable of effectively reducing an effect of heat generation while exhibiting high light resistance. Based on this finding, the present invention has been completed. Hereinafter, the present invention is described with reference to the drawings.

### [Optical Isolator]

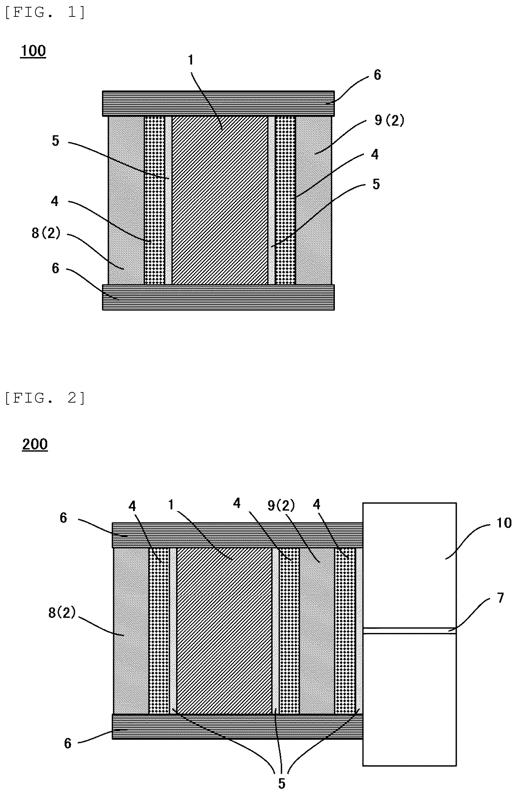

First, an optical isolator according to the present invention is described. FIG. 1 is an example illustrating an optical isolator 100 using metal particle-dispersed glass polarizers bonded to light-transmitting plates and a Faraday rotator. As shown in FIG. 1, the optical isolator 100 according to the present invention includes one or more metal particle-dispersed glass polarizers 2 (first glass polarizer 8 and second glass polarizer 9) and one or more Faraday rotators 1 in a traveling direction of light. In addition, a light-transmitting plate 4 is bonded to at least one surface of light-transmitting surfaces of the metal particle-dispersed glass polarizer 2 without using an organic-based adhesive. As the light-transmitting plate 4, the light-transmitting plate having a higher thermal conductance than the metal particle-dispersed glass polarizer 2 and a refractive index of 2.5 or less at an operating wavelength is used. In such an optical isolator, backscattered light is spread in the light-transmitting plate 4, and heat generated by light absorption in the metal particle-dispersed glass polarizer is also heat-transferred by the light-transmitting plate 4, thus, thermal break damage to an adhesive layer between the light-transmitting plate 4 and the Faraday rotator can be reduced. This optical isolator can effectively reduce the effect of heat generation and exhibit high light resistance. Note that the lower limit of the refractive index is larger than 0 (>0) .

The light-transmitting plate 4 and the Faraday rotator 1 can be bonded without the use of the organic-based adhesive (such as direct bonding). However, it has been found that problems arise, such as strain due to differences in coefficient of thermal expansion between materials affecting optical characteristics (degradation of isolation and increase in insertion loss) and difficulty in precisely aligning the polarizers at a relative angle of 45 degrees. In order to achieve a high degree of isolation, it is necessary to align a relative angle between two types of materials in a state in which laser light is transmitted. On the other hand, in an adhesive-free bonded form, it is necessary to ensure bonding strength by processes such as plasma activation treatment on a material surface under vacuum; these two steps, however, are incompatible with each other.

Consequently, it is preferable that the light-transmitting plate 4 is bonded to the Faraday rotator 1 via an adhesive layer 5, which is an organic-based adhesive, by arranging the light-transmitting plate 4 on the light-transmitting surface of the Faraday rotator 1 side of the metal particle-dispersed glass polarizer 2. Such an optical isolator can more effectively suppress the strain due to differences in the coefficient of thermal expansion between materials from affecting optical characteristics, and the polarizer can be easily set. Moreover, in relative angle alignment of the polarizer, the bonding step using the organic adhesive is easy from a standpoint of being able to precisely align the angle while allowing the laser light to transmit, and also being able to absorb the bonding strain between the materials in the adhesive layer.

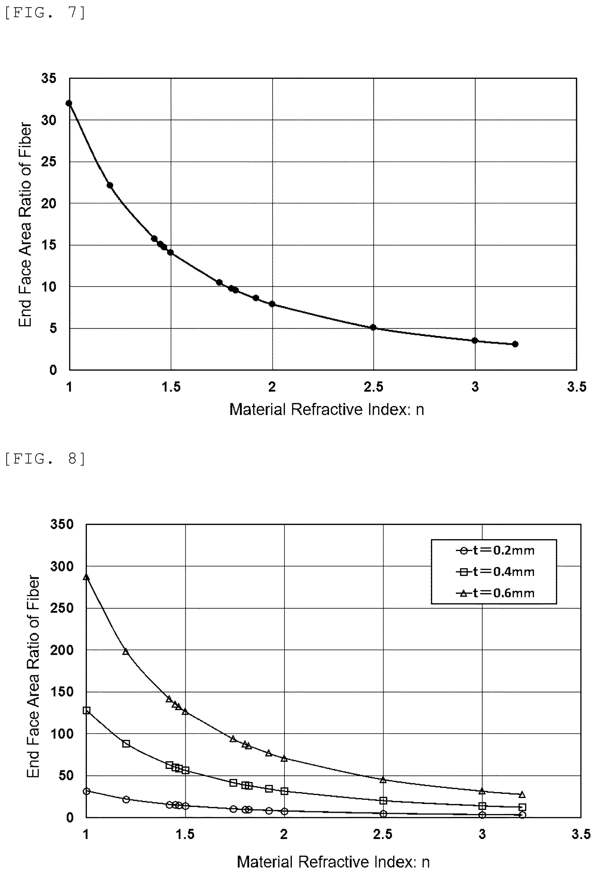

Moreover, as shown in FIG. 2, it is preferable that the optical isolator according to the present invention can be attached to an end portion of an optical fiber and can include the light-transmitting plate 4 on the light-transmitting surfaces opposite side to the Faraday rotator 1 of the metal particle-dispersed glass polarizer 2, thereby allowing the end portion of the optical fiber 7 to be attached to the light-transmitting plate 4. Such an optical isolator can reduce thermal effect more effectively by increasing the beam diameter that reaches the optical isolator material due to the further increased divergence of light from the optical fiber. FIG. 7 shows a refractive index dependency of a ratio of an area of spread light that transmits through the light-transmitting plate and an area at a core end of the optical fiber when assuming the light-transmitting plate has a thickness of 0.2 mm and the optical fiber (SM fiber) has NA=0.14. To obtain five times or more in the end face area ratio of optical fibers for reducing the thermal effect, it is understood that a refractive index of 2.5 or less is desirable. Moreover, FIG. 8 shows an end face area ratio of optical fibers when the thickness of the light-transmitting plate is varied. The thicker light-transmitting plate increases a diffusion area, but this leads to the length of the light-transmitting portion of the isolator being longer and results in a larger isolator.

Note that the operating wavelength of the optical isolator according to the present invention is not limited but can be, for example, 1100 nm or more and 2500 nm or less. Hereinafter, each component of the optical isolator according to the present invention is described in more detail.

### (Metal Particle-Dispersed Glass Polarizer)

First, the metal particle-dispersed glass polarizer is described. The metal particle-dispersed glass polarizer 2 used in the present invention is not particularly limited as long as it is a glass polarizer in which metal particles are dispersed. The polarizing mechanism is based on resonant absorption of conduction electrons in metal nanoparticles. As the metal particle-dispersed glass polarizer 2, for example, Polarcor manufactured by Corning Incorporated, CUPO manufactured by HOYA Corporation, and colorPol manufactured by CODIXX AG, etc., can be used.

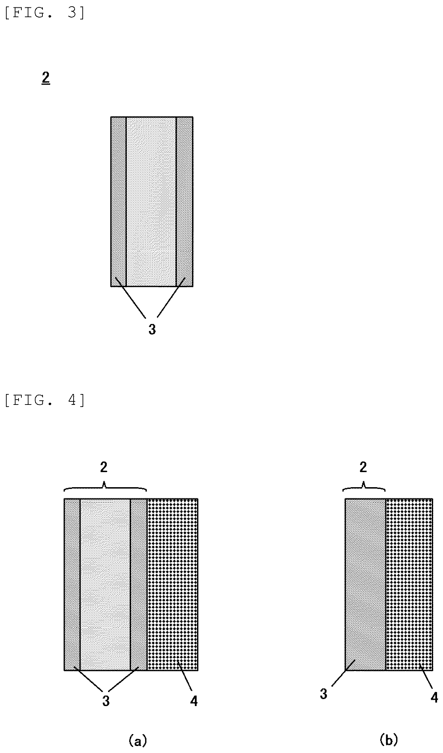

The metal particle-dispersed glass polarizer 2 can, for example, have a total thickness of 0.2 mm to 0.5 mm with a surface layer of about 0.05 to 0.10 mm serving as a reduction layer 3 in which a metal halide is reduced by glass material reduction treatment to form metal particles (FIGs. 3 and 4(a)). This is a mechanism for controlling transmitted polarized light in an orienting portion of this reduction layer 3. Blocked light is broadly divided into light that is scattered backward about 5 to 8% by hitting the metal particles and light that is hit by the metal particles, absorbed, and converted into heat. Note that when a thickness of the metal particle-dispersed glass polarizer 2 is thin (e.g., 0.15 mm or less), the metal particle-dispersed glass polarizer 2 having a structure that is entirely a reduction layer 3 is possible (FIG. 4(b)).

It is preferable to form an AR coat for air on one side of the metal particle-dispersed glass polarizer 2 and an anti-reflective film on the other side matched to the refractive index of the light-transmitting plate described later.

### (Light-Transmitting Plate)

Next, the light-transmitting plate is described. As described above, the light-transmitting plate according to the present invention has higher thermal conductance (thermal conductivity) than the metal particle-dispersed glass polarizer, and the refractive index is 2.5 or less at an operating wavelength. Moreover, it is preferable that the light-transmitting plate has a high transmittance in the wavelength range of light being used and a high extinction performance of 35 dB or more (i.e., a small strain within the material).

Table 1 shows examples of materials usable as the light-transmitting plate, along with examples of the metal particle-dispersed glass polarizer and the Faraday rotator. Note that these are examples of characteristics when the operating wavelength is 1100 nm or more and 2500 nm or less.

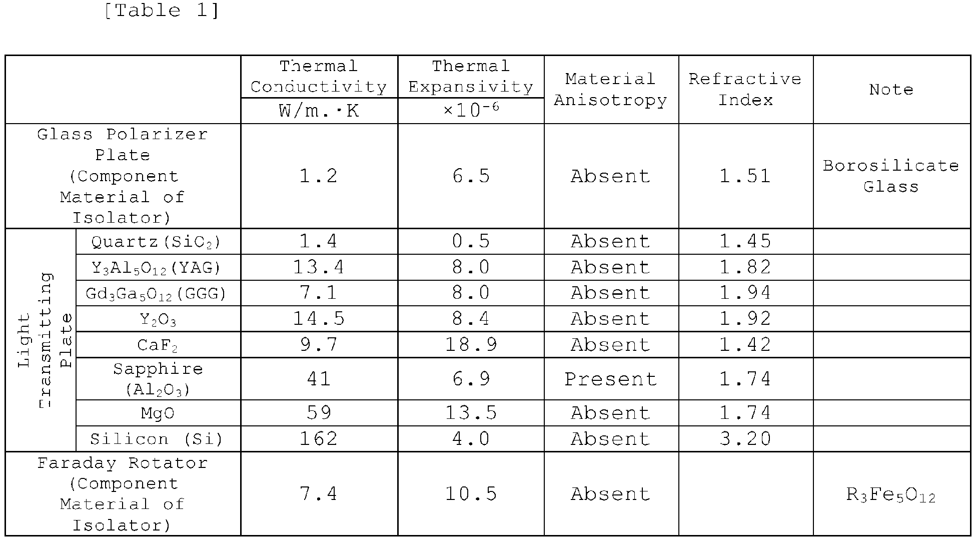

Specific materials that can be used for the light-transmitting plate of the inventive optical isolator include quartz (SiO₂), YAG, GGG, Y₂O3,CaF₂, Al₂O₃, and MgO, among the materials described in Table 1. It is more preferable to use the material having a coefficient of thermal expansion within ±30% of that of the metal particle-dispersed glass polarizer, which is defined as a reference value. In actual usage environment, a temperature fluctuation ranging from -40 to +100°C is expected, and when ease of processing, etc., is considered, YAG, GGG, or the like, which have the coefficient of thermal expansion closer to that of the metal particle-dispersed glass polarizer, are particularly preferable for the light-transmitting plate.

A method for bonding the light-transmitting plate 4 to the light-transmitting surface of the metal particle-dispersed glass polarizer 2 is not particularly limited, provided that the method is not bonding via the organic-based adhesive. For example, such methods can include a method for bonding after plasma-activating of material surfaces in a vacuum, a method for bonding by diffusing both atoms on material surfaces, a method for bonding after hydrophilic treatment on material surfaces, and a method for bonding, such as anodic bonding.

FIG. 3 shows an example (sectional view) of the metal particle-dispersed glass polarizer. It is possible to form the AR coat for air on one side of the metal particle-dispersed glass polarizer 2 in a plate shape, and the anti-reflective film on the other side matched to the refractive index of a light-transmitting thermal diffusion plate. The metal particle-dispersed glass polarizer 2 in the plate shape on which the anti-reflective film is formed is bonded to the light-transmitting plate 4 having a thickness of 0.2 mm without the organic-based adhesive therebetween.

FIG. 4 (a) is an example in which the metal particle-dispersed glass polarizer 2 (partially reduction layer 3), having a thickness of 0.5 mm, is bonded to the light-transmitting plate 4. FIG. 4 (b) is an example in which the metal particle-dispersed glass polarizer 2 (entirely reduction layer 3), having a thickness of 0.12 mm, is bonded to the light-transmitting plate 4.

### (Faraday Rotator)

Next, the Faraday rotator is described. The Faraday rotator has characteristics of rotating a polarization direction of light when a magnetic field is applied (magneto-optical effect, i.e., Faraday effect). The Faraday rotator used in the optical isolator according to the present invention is not particularly limited, but, for example, bismuth-substituted rare earth iron garnet, Y₃Fe₅O₁₂ (YIG), Tb₃Ga₅O₁₂ (TGG), etc., can be exemplified. An interface between the adhesive (adhesive layer 5) and the Faraday rotator 1 may be provided with an anti-reflection coating for adhesives (an AR coating for adhesive), such as an AR coating for epoxy.

### (Others)

As shown in FIGs. 1 and 2, a permanent magnet 6, etc., can be provided as a means for applying a magnetic field to the Faraday rotator 1. The permanent magnet 6 is not particularly limited, but, for example, a SmCo-based magnet and a NdFeB-based magnet, etc., can be used. The shape of the permanent magnet 6 is preferably a hollow and cylindrical shape. At this time, either a single magnet in a desired shape may be used, or a plurality of magnets may be combined to form the desired shape. Moreover, it is preferable that the metal particle-dispersed glass polarizer 2, the light-transmitting plate 4, the Faraday rotator 1, and the permanent magnet 6 are in contact with each other. By configuring in this way, heat generated from the metal particle-dispersed glass polarizer 2 can be dissipated more effectively through the light-transmitting plate 4 and the permanent magnet 6.

Furthermore, it is also preferable to provide a heat-dissipating member having higher thermal conductivity than the permanent magnet 6 among the metal particle-dispersed glass polarizer 2, the light-transmitting plate 4, the Faraday rotator 1, and the permanent magnet 6 so as to configure the metal particle-dispersed glass polarizer 2, the light-transmitting plate 4, and the Faraday rotator 1 to be in contact with the heat-dissipating member. In this way, heat generated from the metal particle-dispersed glass polarizer 2 can be dissipated more effectively. As the heat-dissipating member, for example, stainless steel (SUS304, SUS430), carbon steel, aluminum, brass, copper, alumina, etc., can be used, and it is preferable to use the material having a thermal conductivity of 20 W/(m·K) or more.

### EXAMPLE

Hereinafter, the present invention will be specifically described with reference to Examples. However, the present invention is not limited thereto.

### (Comparative Example 1)

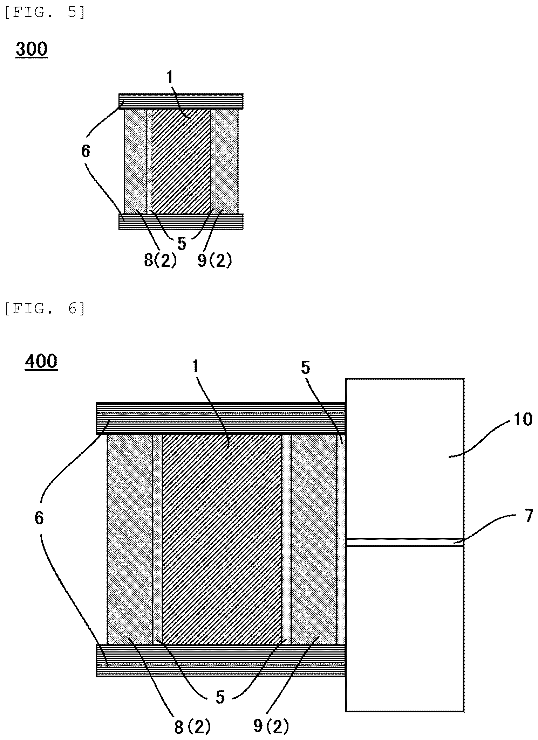

FIG. 5 shows an example of a configuration of an optical isolator 300 using glass polarizers. A first glass polarizer 8 and a second glass polarizer 9 were a plate-shaped metal particle-dispersed glass polarizer 2 (Polacor manufactured by Corning Incorporated) in which metal particles (Ag particles) were oriented. The first glass polarizer 8 and the second glass polarizer 9 were fixed with a Faraday rotator 1 via an adhesive layer 5, being a thermosetting epoxy adhesive. This structure had permanent magnets 6 arranged externally for applying a magnetic field. The Faraday rotator 1 made use of (GdBi)₃ (FeGa) ₅O₁₂.

A production method was as follows. An AR coat for air of 1550 nm was applied on surfaces of the first and second glass polarizers 8 and 9 (11 mm square, thickness of 0.2 mm, extinction performance of 52 dB). An anti-epoxy coat was applied to both surfaces of a 45.0 degree Faraday rotator 1 for 1550 nm (11 mm square, thickness of 0.54 mm), and the Faraday rotator was laminated with AR coat-free surfaces of the first and second glass polarizers 8 and 9 via epoxy adhesive and bonded and fixed so that the relative angle between the first and second glass polarizers 8 and 9 was 45.0 degrees. Subsequently, the resulting laminate was cut and processed into a 2 mm square, which was inserted into a permanent magnet (outer diameter ϕ 5.0 mm x inner diameter ϕ 2.9 mm x length 1.2 mm) and bonded and fixed.

When polarized CW light having a beam diameter ϕ of 0.2 mm and a power of 150 mW was incident from the emission side of the second glass polarizer 9, aligned with a transmitted light polarization axis of the second glass polarizer, a damaging phenomenon was observed in which a hole was formed in the beam transmission region of the adhesive layer 5 at the interface between the first glass polarizer 8 and the Faraday rotator 1 after approximately 30 minutes. Similarly, when polarized CW light having a beam diameter ϕ of 0.2 mm and a power of 150 mW was incident in a direction shifted approximately 45 degrees from the transmitted light polarization axis of the second glass polarizer 9, a damaging phenomenon was observed in which a hole was formed in the interface adhesive layer 5 between the second glass polarizer 9 and the Faraday rotator 1 after approximately 40 minutes. In both cases, no damage was observed in the Faraday rotator or within the glass polarizers, suggesting that the adhesive layer was damaged due to heat generated by the light absorbed in the metal particle reduction layer portion of the metal particle-dispersed glass polarizer being converted into thermal energy.

### (Comparative Example 2)

FIG. 6 shows an example of an optical isolator 400 according to a conventional example (Comparative Example 2), as another example of a configuration of an optical isolator attached to an end portion of an optical fiber. Differences from FIG. 5 included that an emission surface of a second glass polarizer 9 was in a state where an AR coat was not applied, and the second glass polarizer 9 was fixed on a fixing surface composed of an optical fiber fixing member 10, such as a ferrule, and an optical fiber 7 using an epoxy adhesive (adhesive layer 5). When polarized CW light having a power of 150 mW was incident in the optical isolator 400 from the optical fiber 7 side, and a polarization direction thereof was rotated, it was confirmed that, when the polarization direction was intersected at the right angle with a transmitted light polarization axis of the second glass polarizer 9, the adhesive layer 5 portion of the emission end portion of the optical fiber was damaged first, followed by damage to the adhesive layer 5 between the Faraday rotator 1 and the second glass polarizer 9. Alternatively, when the polarization was aligned with the transmitted light polarization axis of the second glass polarizer 9, it was confirmed that a bonding interface between a first glass polarizer 8 and the Faraday rotator 1 was broken. This resulted in the same result as Comparative Example 1 in FIG. 5, which was an example of a configuration without a fiber fixing portion.

### (Example 1)

FIG. 3 shows a structure of a metal particle-dispersed glass polarizer. An AR coat for air was formed on one side of the metal particle-dispersed glass polarizer 2 in the plate shape, and an anti-reflective film was formed on the other side, matched to the refractive index of a light-transmitting thermal diffusion plate.

The metal particle-dispersed glass polarizer 2 in the plate shape on which the anti-reflective film was formed was bonded to the light-transmitting plate 4 having a thickness of 0.2 mm without the organic-based adhesive therebetween. In this Example, a method was used in which a material surface was plasma-activated in a vacuum and then bonded.

FIG. 4 (a) is an actually produced example in which the metal particle-dispersed glass polarizer 2, having a thickness of 0.5 mm, was bonded to a light-transmitting plate 4 made of Y₂O₃. FIG. 4 (b) is an actually produced example in which the metal particle-dispersed glass polarizer 2, having a thickness of 0.12 mm, was bonded to the light-transmitting plate 4 made of YAG.

As Example 1, a produced structure shown in FIG. 4 (b) and a Faraday rotator were used to be bonded and fixed therebetween using an epoxy adhesive while adjusting the relative angle between the polarizers to 45 degrees. The configuration was fixed such that the light-transmitting plate 4 side, which was bonded to the polarizer, faced the Faraday rotator (FIG. 1).

When polarized CW light having a beam diameter ϕ of 0.2 mm and a power of 150 mW was incident from the emission side of the second glass polarizer 9, aligned with a transmitted light polarization axis of the second glass polarizer 9. After approximately 60 minutes had passed, no changes were observed in the light-transmitting plate 4, regardless of whether the material was any of quartz, YAG, GGG, Al₂O₃, or MgO. When time exceeded 10 hours, discoloration began to appear around the adhesive on the quartz material, but no abnormalities were observed on the other materials. Similarly, when polarized CW light having a beam diameter ϕ of 0.2 mm and a power of 150 mW was incident in a direction shifted approximately 45 degrees from the transmitted light polarization axis of the second glass polarizer, no abnormalities were observed in the adhesive layers of any of the materials even after approximately 60 minutes had passed.

Next, a heat and light resistance test was performed. When a temperature of an optical isolator was varied in a range from -40 to +100, isolations showed values that were 3 to 5 dB lower at four corners of chips compared to center in quartz, Al₂O₃, and MgO. This is considered to be due to strain at the bonded portion between a heatsink and a polarizer made of borosilicate glass, which originated from differences in the coefficient of thermal expansion. As a result, it is considered that an extinction performance of the glass polarizers was degraded, leading to a degradation of the isolation.

### (Comparative Example 3)

As Comparative Example 3, a heat and light resistance test was performed using an optical isolator having the same material and structure as in Example 1, except that Si was used as a light-transmitting plate 4. When a temperature of an optical isolator was varied between -40 to +100°C, isolations showed values that were 5 to 7 dB lower at four corners of chips compared to center. This is considered to be due to strain at the bonded portion between a light-transmitting plate and a polarizer made of borosilicate glass, which originated from differences in the coefficient of thermal expansion. As a result, it is considered that an extinction performance of the glass polarizers was degraded, leading to a degradation of the isolation. Furthermore, the same chip structure was subjected to a light resistance test by attaching thereof to an optical fiber end and by returning light from the fiber side. Although the chip in Example 1 showed no abnormalities at a chip bonding interface, in a chip using Si, an abnormality (a delamination phenomenon) was observed at a bonding (adhesion) interface. This is considered to be due to a high refractive index of the light-transmitting plate, causing light to remain concentrated, resulting in insufficient heat dissipation and thus damage to the bonding interface (this is considered to be because the refractive index of the light-transmitting plate exceeded 2.5, preventing a beam reaching the optical isolator from expanding in diameter, thereby reducing the effectiveness of mitigating thermal effects).

### (Example 2)

A test was performed using the same materials as in Example 1 and also using an example of a configuration of an optical isolator 200 shown in FIG. 2. Differences from an optical isolator in FIG. 1 included that an emission surface of a second glass polarizer 9 was in a state where an AR coat was not applied, and the emission surface of the second glass polarizer 9 was fixed on a fixing surface of an optical fiber 7 using an epoxy adhesive. When polarized CW light having a power of 150 mW was incident in the optical isolator 200 from the optical fiber 7 side, and a polarization direction thereof was rotated, an adhesive layer portion abnormality at an emission end portion of the optical fiber 7 was not observed, when the polarization direction was intersected at the right angle with a transmitted light polarization axis of the second glass polarizer 9. Subsequently, it was confirmed that an adhesive layer 5 between a Faraday rotator 1 and the second glass polarizer 9 was not damaged; and even when the polarization direction was aligned to the transmitted light polarization axis of the second glass polarizer, no abnormalities were observed on a bonding interface between a first glass polarizer and the Faraday rotator.

As described above, according to the Examples of the present invention, it was possible to obtain the optical isolator having high light resistance that can effectively reduce the effects of heat generation.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. An optical isolator comprising one or more metal particle-dispersed glass polarizers and one or more Faraday rotators in a traveling direction of light, wherein
a light-transmitting plate having a higher thermal conductance than the metal particle-dispersed glass polarizer and a refractive index of 2.5 or less at an operating wavelength is bonded to at least one surface of a light-transmitting surface of the metal particle-dispersed glass polarizer without using an organic-based adhesive.

2. The optical isolator according to claim 1, wherein
the optical isolator comprises the light-transmitting plate on the light-transmitting surface of the Faraday rotator side of the metal particle-dispersed glass polarizer, and the light-transmitting plate and the Faraday rotator are bonded via the organic-based adhesive.

3. The optical isolator according to claim 1 or 2, wherein
the optical isolator is attached to an end portion of an optical fiber, and
the optical isolator comprises the light-transmitting plate on the light-transmitting surface opposite side to the Faraday rotator of the metal particle-dispersed glass polarizer, thereby allowing the end portion of the optical fiber to be attached to the light-transmitting plate.
